**Europäisches Patentamt**

**European Patent Office**

**Office européen des brevets**

(19)

(11) Veröffentlichungsnummer: **0 093 232**
**B1**

## EUROPÄISCHE PATENTSCHRIFT

(12)

(45) Veröffentlichungstag der Patentschrift:
**29.11.89**

(51) Int. Cl.⁴: **G 01 D 5/245**, G 01 D 5/14

(21) Anmeldenummer: **83101426.1**

(22) Anmeldetag: **15.02.83**

(54) Magnetische Längen- oder Winkelmesseinrichtung.

(30) Priorität: **21.04.82 DE 3214794**

(43) Veröffentlichungstag der Anmeldung:
**09.11.83 Patentblatt 83/45**

(45) Bekanntmachung des Hinweises auf die Patenterteilung:
**29.11.89 Patentblatt 89/48**

(84) Benannte Vertragsstaaten:
**AT CH FR GB IT LI NL SE**

(56) Entgegenhaltungen:
**EP-A- 0 048 983**
**DE-A- 2 739 877**
**FR-A- 2 418 442**
**US-A- 4 124 814**

(73) Patentinhaber: **Dr. Johannes Heidenhain GmbH,
Nansenstrasse 17, D-8225 Traunreut (DE)**

(72) Erfinder: **Spies, Alfons, Dipl.-Ing., Wopfnerstrasse 2,
D-8221 Seebruck (DE)**

**Beschreibung**

Die Erfindung betrifft eine magnetische Meßeinrichtung zum Messen von Längen oder Winkeln gemäß dem Oberbegriff der Ansprüche 1 und 2.

Derartige magnetische Positionsmeßeinrichtungen sind bereits bekannt. In der DE-PS 2 428 785 ist eine magnetische Meßeinrichtung zur Ermittlung der Position einer in Längsrichtung verschiebbaren Stange offenbart. Die zylindrische Stange aus magnetisch leitendem Material ist auf ihrem Umfang mit schraubenlinienförmig eingeschnittenen Rillen versehen, die mit einem magnetisch nichtleitenden Material gefüllt sind. Die Teilung in Form von magnetisch leitenden und nichtleitenden Abschnitten in Längserstreckung der Stange wird von einer Abtasteinheit abgetastet, die radialsymmetrisch um die Stange angeordnet ist und einen Permanentmagneten, Polschuhe zum Abtasten der Teilung und magnetfeldempfindliche Fühlerelemente aufweist.

Die Abtasteinheit enthält dabei mehrere Abtaststellen, die in einer Ebene senkrecht zur Stangenachse über den Umfang der Stange verteilt sind. Dieses Meßsystem weist den Nachteil auf, daß bei größeren Meßlängen eine Unterstützung der Stange nicht möglich ist, da die Abtasteinheit die Stange auf ihrem ganzen Umfang umgibt. Durch die Anordnung des Permanentmagneten mit einer Magnetisierungsrichtung in Längserstreckung der Stange entstehen bei Umkehrung der Meßrichtung des Abtastkopfes aufgrund der endlichen Remanenz des Stangenmaterials große Umkehrspannen der von den magnetfeldempfindlichen Fühlerelementen abgegebenen elektrischen Signale, so daß die Meßgenauigkeit beeinträchtigt wird. Die Abtasteinheit ist zudem infolge der räumlichen Anordnung der Abtaststellen gegen äußere magnetische Störfelder empfindlich.

Aus der Literaturstelle «Simon: Die numerische Steuerung von Werkzeugmaschinen, 2. Auflage, 1971» ist im Abschnitt 4.4 «Das Accupin» eine magnetische Meßeinrichtung beschrieben, bei der der Maßstab aus dünnen zylindrischen Zapfen aus magnetisch leitendem Material besteht, die in die Nuten einer Metallschiene aus unmagnetischem Material eingelegt sind. Die Abtasteinheit weist mehrere Spulen auf, deren Induktivität durch den Maßstab moduliert wird. Da der Maßstab aus vielen einzelnen Teilen besteht, ist er teuer in der Herstellung und wenig robust bei der Handhabung.

Die US-A-4 124 814 offenbart eine magnetische Längenmeßeinrichtung mit einem Permanentmagneten oder einem Elektromagneten zur Erzeugung eines magnetischen Gleichfeldes in einer Abtasteinheit, die eine Meßteilung mittels eines magnetfeldempfindlichen Fühlerelements zur Erzeugung eines positionsabhängigen Ausgangssignals abtastet.

Die DE-A-2 739 877 beschreibt eine magnetische Längen- oder Winkelmeßeinrichtung mit einem Permanentmagneten zur Erzeugung eines magnetischen Gleichfeldes in einer Abtasteinheit, die eine Meßteilung mittels zweier magnetfeldempfindlicher Fühlerelemente zur Erzeugung von positionsabhängigen Ausgangssignalen abtastet.

Die EP-A-0 048 983 zeigt eine Winkelmeßeinrichtung, bei der die Meßteilung eines Maßstabes aus Permanentmagneten gleicher Breite besteht, die von einer Abtasteinheit mit vier magnetischen Widerstandselementen zur Erzeugung von positionsabhängigen Ausgangssignalen abgetastet wird. Die vier magnetischen Widerstandselemente besitzen in Meßrichtung jeweils eine Breite, die etwas kleiner als die Teilungsperiode der Meßteilung ist, und bilden zwei Gruppen, wobei die Widerstandselemente jeder Gruppe mit einem Intervall zueinander versetzt sind, das gleich einer ganzen Teilungsperiode oder einer halben Teilungsperiode ist.

Der Erfindung liegt die Aufgabe zugrunde, eine magnetische Meßeinrichtung der genannten Gattung anzugeben, die die Gewinnung nullsymmetrischer Ausgangssignale bei der Abtastung ermöglicht.

Diese Aufgabe wird erfindungsgemäß durch die Anordnungen der Ansprüche 1 und 2 gelöst.

Die mit der Erfindung erzielten Vorteile bestehen insbesondere darin, daß bei einer derartigen Meßeinrichtung mit einer einfach aufgebauten und billig zu fertigenden Meßteilung Ausgangssignale bei der Abtastung erzeugt werden, deren Nullsymmetrie auch bei Abstandsschwankungen zwischen der Meßteilung und der Abtasteinheit erhalten bleibt. Es ergibt sich somit eine preisgünstige Meßeinrichtung mit hoher Meßgenauigkeit, die auch eine Interpolation der Meßwerte zuläßt.

Vorteilhafte Ausbildungen der Erfindung entnimmt man den Unteransprüchen.

Ausführungsbeispiele der Erfindung werden anhand der Zeichnung näher erläutert.

Es zeigen

Figur 1a, b schematisch einen Längsschnitt und einen Querschnitt einer magnetischen Längenmeßeinrichtung,

Figur 2a, b einen Querschnitt und eine Draufsicht eines Maßstabs,

Figur 3a, b einen Längsschnitt und eine Ansicht eines Maßstabs,

Figur 4a, b eine Draufsicht und einen Querschnitt eines Maßstabs,

Figur 5a, b einen Querschnitt und eine Draufsicht eines Maßstabs,

Figur 6 einen Querschnitt einer Abtasteinheit mit einem Maßstab,

Figur 7 eine weitere Abtasteinheit mit einem Maßstab und

Figur 8 eine Abgleichsschaltungsanordnung.

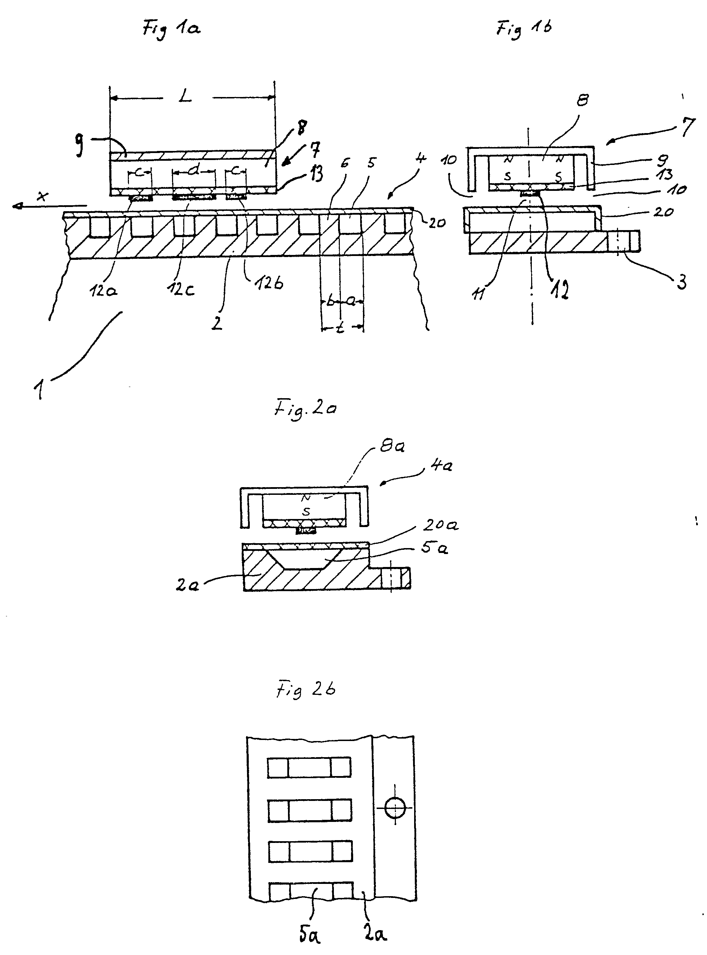

In Figur 1a, b ist schematisch in einem Längsschnitt und in einem Querschnitt eine magnetische Längenmeßeinrichtung dargestellt, bei der an einem Bett 1 einer nicht gezeigten Maschine ein Maßstab 2 aus magnetisch leitendem Material mittels einer Schraubverbindung 3 befestigt ist. Der Maßstab 2 weist auf seiner Oberfläche eine Teilung 4 in Form von äquidistanten Vertiefungen 5 auf, die durch Stege 6 voneinander getrennt sind. Die Vertiefungen 5 können zur Erzielung einer glatten Oberfläche des Maßstabs 2 mit einem magnetisch neutralen Material ausgefüllt sein. Die Teilung 4 besitzt eine Teilungsperiode t, die sich aus der Länge a einer Vertiefung 5 und aus der Länge b eines Steges 6 in Längserstreckung des Maßstabes 2 zusammensetzt.

Die Teilung 4 des Maßstabs 2 wird von einer Abtasteinheit 7 abgetastet, die mit einem nicht gezeigten Schlitten der Maschine verbunden ist und aus einem Permanentmagneten 8 besteht, der von einem Flußleitstück 9 umschlossen ist. Der Permanentmagnet 8, das Flußleitstück 9 und der Maßstab 2 bilden ein magnetisches System mit seitlichen Luftspalten 10 und einem mittleren Luftspalt 11 in Höhe der Mittellinie 12 der Teilung 4. Der Permanentmagnet 8 erzeugt in den Luftspalten 10, 11 eine magnetische Induktion B. Im Luftspalt 11 ist nun aufgrund der zahnförmigen Teilung 4 auf der Oberfläche des Maßstabs 2 die Induktion B über die Länge L der Abtasteinheit in Längserstreckung des Maßstabs 2 nicht konstant, sondern mit der Periode t der Teilung 4 inhomogen.

Im Luftspalt 11 befinden sich magnetfeldempfindliche Fühlerelemente 12, beispielsweise in Form von Hallelementen oder Feldplatten, die der Teilung 4 direkt benachbart sind und der magnetischen Induktion B proportionale Ausgangssignale erzeugen. Die Länge c der Fühlerelemente 12a, 12b in Längserstreckung des Maßstabs 2 ist kleiner als $t/2$, während die Länge d des Fühlerelementes 12c $n \cdot t$ beträgt ($n = 1, 2, ...$). Die Fühlerelemente 12a, 12b besitzen in Längserstreckung des Maßstabs 2 (Meßrichtung x) einen Abstand von $(n + 1/4) \cdot t$ ($n = 1, 2, ...$) zueinander.

Bei Bewegung des Abtasteinheit 7 in Meßrichtung x liefern wegen der sinusförmigen Induktion B im Luftspalt 11 das Fühlerelement 12a das Ausgangssignal

$$U_1 = U_o + U \sin 2\pi x/t$$

und das Fühlerelement 12b das Ausgangssignal

$$U_2 = U_o + U \cos 2\pi x/t$$

sowie das Fühlerelement 12c das Ausgangssignal (für $n = 1$)

$$U_3 = 2 U_o.$$

Durch Differenzbildung der Ausgangssignale $U_1 - U_3/2$ und $U_2 - U_3/2$ erhält man die Ausgangssignale

$$U_1' = U \sin 2\pi x/t \text{ und}$$
$$U_2' = U \cos 2\pi x/t,$$

die einer bekannten Auswerte- und Interpolationseinrichtung zugeführt werden.

Die in der Abtasteinheit 7 fest angeordneten Fühlerelemente 12 können direkt auf dem Permanentmagneten 8 oder auf einer Platine 13 aus nichtmagnetischem Material angebracht sein, die mit dem Permanentmagneten 8 verbunden ist. Vorzugsweise besteht die Platine 13 aus einem Material, das auch elektrisch nichtleitend ist, wie z.B. Leiterplattenmaterial. Die Platine 13 kann gleichzeitig die elektrischen Versorgungsleitungen und Ausgangssignalleitungen für die Fühlerelemente 12 enthalten.

Bei der Ausführung des Maßstabes 2 nach Figur 1 soll die Länge L der Flußleitstücke 9 sowie des Permanentmagneten 8 ein ganzzahliges Vielfaches der Teilungsperiode t der Teilung 4 betragen; dann ändert sich der Gesamtfluß durch das Magnetsystem bei Bewegung der Abtasteinheit 7 nicht und der Arbeitspunkt des Permanentmagneten 8 bleibt konstant.

Bei der Meßbewegung der Abtasteinheit 7 werden die Bereiche des Maßstabs 2, die sich gegenüber der Abtasteinheit 7 befinden, von einem Gleichfeld magnetisiert. Die außerhalb des Bereichs der Abtasteinheit 7 befindlichen Bereiche des Maßstabs 2 besitzen eine Induktion, die der Remanenz des Maßstabsmaterials entspricht. Damit bei der Hin- und Herbewegung der Abtasteinheit 7 nur eine kleine Umkehrspanne bei den von den Fühlerelementen 12 erzeugten Ausgangssignalen entsteht, ist es wichtig, daß der von der Abtasteinheit 7 erzeugte Magnetfluß den Maßstab 2 nur in einer Richtung durchsetzt, so daß das Maßstabsmaterial nur die Hysteresekurve eines Quadranten (des ersten oder dritten Quadranten je nach der Polung des Magneten 8) durchläuft. Die Anordnung des Magneten 8 nach Figur 1 ist für diesen Zweck günstig.

Figur 2a, b zeigt in einem Querschnitt und in einer Draufsicht einen Maßstab 2a, bei dem die Vertiefungen 5a nicht bis an den Rand des Maßstabs 2 reichen, sondern nur etwa so breit wie der Magnet 8a der Abtasteinheit 4a sind. Die Abtasteinheit 4a entspricht im Aufbau der Abtasteinheit 4 nach Figur 1. Die Vertiefungen 5a können wieder zur Erzielung einer glatten Oberfläche des Maßstabs 2a mit einem nichtmagnetischen Material ausgefüllt sein.

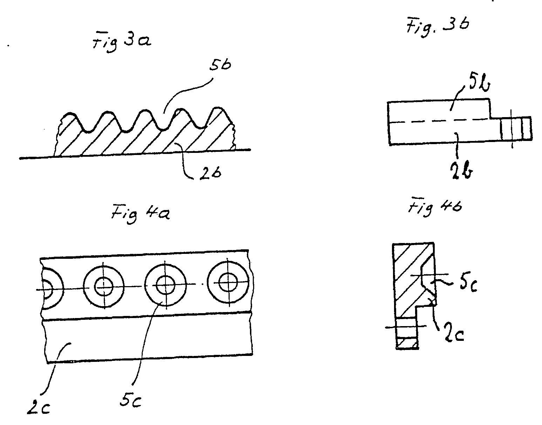

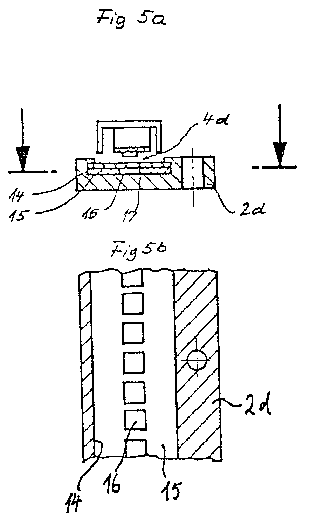

Figur 3a, b zeigt in einem Längsschnitt und in einer Ansicht einen Maßstab 2b mit muldenförmigen Vertiefungen 5b und Figur 4a, b in einer Draufsicht und in einem Querschnitt einen Maßstab 2c mit kegelstumpfförmigen Vertiefungen 5c. Bei diesen Maßstäben 2b, 2c werden auch bei kleinem Abstand zwischen der Abtasteinheit und dem Maßstab 2b, 2c optimale sinusförmige Ausgangssignale erhalten. Die Vertiefungen 5b, 5c können ebenfalls mit einem nichtmagnetischen Material ausgefällt sein.

Figur 5a, b zeigt in einem Querschnitt und in einer Draufsicht einen Maßstab 2d aus nichtmagnetischem Material mit einer in Längserstreckung verlaufenden Nut 14, in der sich als Teilung 4d ein dünnes Band 15 aus weichmagnetischem Material befindet, in das Aussparungen 16 eingestanzt sind. Zum Schutz der Teilung 4d ist in der Nut 14 über dem Band 15 eine Abdeckfolie 17 aus nichtferromagnetischem Material vorgesehen. Die Abtastung des Maßstabs 2d erfolgt mit einer Abtasteinheit gemäß Figur 1.

Die Vertiefungen 5, 5a, 5b, 5c können auch mit einer Schutzfolie 20, 20a aus nichtmagnetischem Material abgedeckt sein.

Für große Meßlängen kann in nicht gezeigter Weise der Maßstab auch aus mehreren Stücken bestehen; die Trennfuge zwischen den einzelnen Stücken wird dabei zweckmäßigerweise in eine Vertiefung gelegt, so daß ein eventuell entstehender Spalt zwischen den Stücken keinen Einfluß auf die erzeugten Ausgangssignale hat.

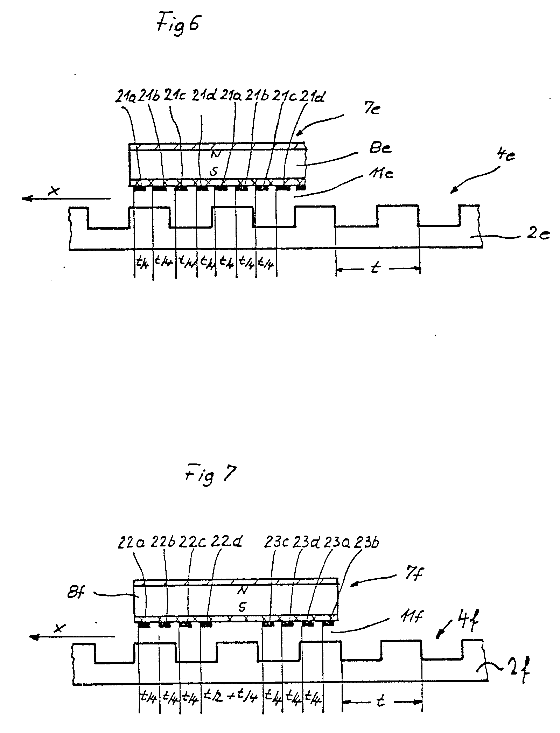

In Figur 6 ist eine Abtasteinheit 7e gezeigt, bei der im Luftspalt 11e des Magneten 8e mehrere, jedoch mindestens eine aus je vier Fühlerelementen 21a, 21b, 21c, 21d bestehende Gruppen angeordnet sind, deren aktive Länge in Längserstreckung des Maßstabs 2e nicht größer als 1/4 der Teilungsperiode t der Teilung 4e ist. Die Ausgangssignale der Fühlerelemente 21a, 21c mit dem Abstand $n \cdot t/2$ ($n = 1, 2, \ldots$) sind miteinander zu einer ersten Signalgruppe derart verknüpft, daß die Ausgangssignale der Fühlerelemente 21a mit dem Abstand $n \cdot t$ ($n = 1, 2, \ldots$) zueinander summiert und die Ausgangssignale der Fühlerelemente 21c mit dem Abstand $(k + 1/2) t$ ($k = 0, 1, 2, \ldots$) zu den Fühlerelementen 21a subtrahiert werden. Die Ausgangssignale der verbleibenden Fühlerelemente 21b, 21d bilden eine zweite Signalgruppe und werden analog wie die Ausgangssignale der Fühlerelemente 21a, 21c miteinander verknüpft. Die Fühlerelemente 21a, 21c der ersten Gruppe und die Fühlerelemente 21b, 21d der zweiten Gruppe liefern Ausgangssignale der Form

$$U_1 = U \sin \pi x/t \text{ und}$$
$$U_2 = U \cos 2 \pi x/t,$$

die wiederum einer bekannten Auswerte- und Interpolationseinrichtung zugeführt werden.

Die Fühlerelemente 21 können auch einen Abstand größer als $t/4$ zueinander haben, beispielsweise $n \cdot t/2 + t/4$ ($n = 1, 2, \ldots$). Es müssen dann die Fühlerelemente 21a, 21c mit den Abständen $k \cdot t/2$ ($k = 1, 2, \ldots$) zu einer ersten Gruppe und die verbleibenden Fühlerelemente 21b, 21d zu einer zweiten Gruppe zusammengefaßt werden. Die Fühlerelemente 21 können dann in Meßrichtung eine Länge bis zu $t/2$ haben.

In Figur 7 ist eine Abtasteinheit 7f gezeigt, bei der im Luftspalt 11f des Magneten 8f mindestens zwei Gruppen mit je vier Fühlerelementen 22a, 22b, 22c, 22d; 23c, 23d, 23a, 23b angeordnet sind. Zwischen den Fühlerelementen 22a, 22b, 22c, 22d der ersten Gruppe und den Elementen 23c, 23d, 23a, 23b der zweiten Gruppe besteht ein freier Raum der Ausdehnung $n \cdot t/2 + t/4$ ($n = 1, 3, 5, \ldots$). Die Ausgangssignale der Fühlerelemente 22; 23 sind wieder in zwei Signalgruppen zusammengefaßt. Für die erste Signalgruppe werden die Ausgangssignale der Fühlerelemente 22a, 23a summiert und davon die Ausgangssignale der Fühlerelemente 22c, 23c subtrahiert. Die verbleibenden Elemente 22b, 23b, 22d, 23d werden analog wie diese geschaltet.

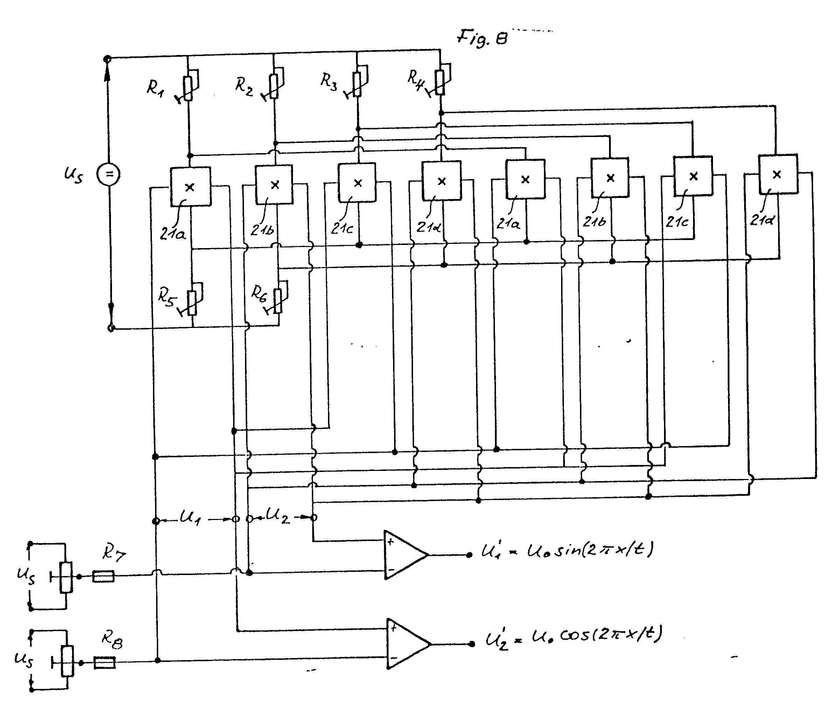

Die Figur 8 zeigt eine geeignete Schaltungsanordnung zum Abgleich der Ausgangssignale der Fühlerelemente nach Figur 6 oder Figur 7. Als Fühlerelemente werden Hallelemente verwendet. An den Anschlüssen des Netzwerkes liegt die konstante Gleichspannung $U_s$, die über die Widerstände $R_1$–$R_6$ die Hallelemente mit dem notwendigen Steuerstrom $I_{st}$ speist. Wie bekannt, ist die Ausgangsspannung eines Hallelementes: $U_H = R_H \cdot (I_{st} \times B)$, mit $R_H$ = Hallkonstante, $B$ = magnetische Induktion. Die Ausgänge der Hallelemente sind in schon anhand von Figur 6 und 7 beschriebener Weise in Summe und Differenz miteinander geschaltet und liefern zwei Signale $U_1$, $U_2$, die den Differenzverstärkern $V_1$ und $V_2$ zugeführt werden.

In die Speiseleitungen der Elemente der ersten Gruppe sind abgleichbare Widerstände $R_1$, $R_3$ und $R_5$ eingeschaltet, mit denen der Steuerstrom der einzelnen Hallelemente verändert werden kann. Die Steuerleitungen der Elemente, deren Ausgänge in Summe miteinander verbunden sind, sind parallel geschaltet.

Mit den Widerständen $R_1$ und $R_3$ werden die Steuerströme so eingestellt, daß sich bei Abstandsänderungen zwischen Abtastkopf und Maßstab die dem Signal $U_1$ zunächst überlagerten Gleichspannungen nicht verändern. Die Widerstände $R_2$ und $R_4$, die zur zweiten Gruppe gehören (Signal $U_2$), werden analog eingestellt.

Mit den Widerständen $R_5$ und $R_6$, die in der jeweils gemeinsamen Rückleitung der Elemente der beiden Signalgruppen liegen, werden die Amplituden der beiden Signale $U_1$ und $U_2$ auf Gleichheit eingestellt. Die noch verbleibenden Gleichspannungsanteile der Signale $U_1$ und $U_2$ werden durch Stromsummation über die Widerstände $R_7$ bzw. $R_8$ auf Null abgeglichen, so daß sich schließlich die Ausgangsspannungen $U_1'$ und $U_2'$ ergeben.

Die Hallelemente können statt mit der Gleichspannung $U_s$ auch mit Wechselspannung betrieben werden. Es sind dann alle von Synchro, Resolver und Inductosyn her bekannten Auswerte- und Interpolationsverfahren anwendbar.

## Patentansprüche

1. Magnetische Meßeinrichtung zum Messen von Längen oder Winkeln zweier relativ zueinander beweglicher Objekte (1) mit wenigstens einem Permanentmagneten (8) oder einem Elektromagneten zur Erzeugung eines magnetischen Gleichfeldes in einer Abtasteinheit (7), die eine Meßteilung (4) mit abwechselnd magnetisch leitenden und magnetisch nichtleitenden Bereichen abtastet, wobei die vom Magneten (8) in der Meßteilung (4) erzeugte Induktion nur in Ebenen senkrecht zur Längserstreckung der Meßteilung (4) verläuft und wobei sich im Luftspalt (11) zwischen dem Magneten (8) und der Meßteilung (4) mit dem Magneten (8) fest verbundene magnetfeldempfindliche Fühlerelemente (12) befinden, die die entsprechend der Teilungsperiode t der Meßteilung (4) inhomogene Luftspaltinduktion abtasten und positionsabhängige Ausgangssignale ($U_1'$, $U_2'$) erzeugen, die einer Auswerteeinrichtung zur Positionsbestimmung zugeführt werden, dadurch gekennzeichnet, daß zur Gewinnung der wenigstens zwei nullsymmetrischen Ausgangssignale ($U_1'$, $U_2'$) sich im Luftspalt (11) mindestens eine Gruppe aus je drei Fühlerelementen (12a, 12b, 12c) befindet, wobei die Länge c des ersten und des dritten Fühlerelements (12a, 12b) in Meßrichtung x jeweils kleiner als t/2 und die Länge d des zweiten Fühlerelements (12c) n · t (n = 1, 2, ...) sind und wobei der gegenseitige Abstand des ersten und des dritten Fühlerelements (12a, 12b) (n + 1/4) · t (n = 1, 2, ...) beträgt, und daß die Differenz zwischen dem Ausgangssignal des ersten Fühlerelements (12a) und dem halben Ausgangssignal des zweiten Fühlerelements (12c) das erste nullsymmetrische Ausgangssignal ($U_1'$) und die Differenz zwischen dem Ausgangssignal des dritten Fühlerelements (12b) und dem halben Ausgangssignal des zweiten Fühlerelements (12c) das zweite nullsymmetrische Ausgangssignal ($U_2'$) bilden.

2. Magnetische Meßeinrichtung zum Messen von Längen oder Winkeln zweier relativ zueinander beweglicher Objekte (1) mit wenigstens einem Permanentmagneten (8) oder einem Elektromagneten zur Erzeugung eines magnetischen Gleichfeldes in einer Abtasteinheit (7), die eine Meßteilung (4) mit abwechselnd magnetisch leitenden und magnetisch nichtleitenden Bereichen abtastet, wobei die vom Magneten (8) in der Meßteilung (4) erzeugte Induktion nur in Ebenen senkrecht zur Längserstreckung der Meßteilung (4) verläuft und wobei sich im Luftspalt (11) zwischen dem Magneten (8) und der Meßteilung (4) mit dem Magneten (8) fest vebundene magnetfeldempfindliche Fühlerelemente (21) befinden, die die entsprechend der Teilungsperiode t der Meßteilung (4) inhomogene Luftspaltinduktion abtasten und positionsabhängige Ausgangssignale ($U_1$, $U_2$) erzeugen, die einer Auswerteeinrichtung zur Positionsbestimmung zugeführt werden, dadurch gekennzeichnet, daß zur Gewinnung der wenigstens zwei nullsymmetrischen Ausgangssignale ($U_1$, $U_2$) sich im Luftspalt (11e) mindestens eine Gruppe aus je vier Fühlerelementen (21a–21d) befindet, wobei die Länge jedes Fühlerelements (21a–21d) im Meßrichtung x kleiner als t/4 ist und der gegenseitige Abstand der Fühlerelemente (21a–21d) n · t/4 (n = 1, 3, ...) beträgt, und daß die Ausgangssignale des ersten und des dritten Fühlerelements (21a, 21c) mit dem gegenseitigen Abstand k · t/2 (k = 1, 3, ...) voneinander subtrahiert das erste nullsymmetrische Ausgangssignal ($U_1$) und die Ausgangssignale des zweiten und des vierten Fühlerelements (21b, 21d) mit dem gegenseitigen Abstand k · t/2 (k = 1, 3, ...) voneinander subtrahiert das zweite nullsymmetrische Ausgangssignal ($U_2$) liefern.

3. Meßeinrichtung nach Anspruch 1 oder 2, dadurch gekennzeichnet, daß die Meßteilung (4) auf einem massiven Träger (2) aus weichmagnetischem Material in Form von Vertiefungen (5) und Stegen (6), beispielsweise in Form einer Zahnstange aufgebracht ist.

4. Meßeinrichtung nach Anspruch 3, dadurch gekennzeichnet, daß die Meßteilung (4b) aus muldenförmigen Vertiefungen (5b) im Träger (2b) besteht.

5. Meßeinrichtung nach Anspruch 3, dadurch gekennzeichnet, daß die Meßteilung (4c) aus kegelstumpfförmigen Vertiefungen (5c) im Träger (2c) besteht.

6. Meßeinrichtung nach Anspruch 1 oder 2, dadurch gekennzeichnet, daß die Meßteilung (4d) aus einem dünnen Band (15) aus weichmagnetischem Material besteht, in das Aussparungen (16) eingestanzt sind und das in einer Nut (14) eines Profils (2d) aus nichtmagnetischem Werkstoff eingezogen ist.

7. Meßeinrichtung nach Anspruch 1 oder 2, dadurch gekennzeichnet, daß der Magnet (8) zur Leitung des Magnetfeldes und Abschirmung gegen Störfelder von Flußleitstücken (9) umgeben ist.

8. Meßeinrichtung nach Anspruch 1 oder 2, dadurch gekennzeichnet, daß die Fühlerelemente (12, 21, 22, 23) auf einer Platine (13) aus nichtmagnetischem Material angeordnet sind, die mit dem Magneten (8) verbunden ist.

9. Meßeinrichtung nach Anspruch 8, dadurch gekennzeichnet, daß die Platine (13) aus elektrisch nicht leitendem Material besteht und gleichzeitig die elektrischen Versorgungsleitungen und Ausgangssignalleitungen für die Fühlerelemente (12, 21, 22, 23) enthält.

**Claims**

1. Magnetic measuring apparatus for measuring lengths or angles of two objects movable relative to one another, with at least one permanent magnet (8) or an electromagnet for generating a steady magnetic field in a sensing unit (7), which senses a measuring graduation (4) with alternating magnetically conducting and magnetically non-conducting regions, wherein the induction generated in the measuring graduation (4) runs only in planes perpendicular to the longitudinal extent of the measuring graduation (4) and wherein there are sensor elements (12) sensitive to the magnetic field in the air-gap (11) between the magnet (8) and the measuring graduation (4) and fixedly connected to the magnet (8), which sense the air-gap induction, inhomogeneous in accordance with the graduation period t of the measuring graduation (4), and generate position-dependant output signals ($U_1'$, $U_2'$), which are fed to a processing device for position determination, characterized in that, for deriving the at least two zero-symmetrical output signals ($U_1'$, $U_2'$) there is located in the air-gap (11) at least one group of three sensor elements (12a, 12b, 12c), wherein the length c of the first and the third sensor elements (12a, 12b) in the measuring direction x is in each case less than t/2 and the length d of the second sensor element (12c) is n · t (n = 1, 2, ...) and wherein the mutual pitch of the first and the third sensor elements (12a, 12b) amounts to (n + 1/4) · t (n = 1, 2, ...), and in that the difference between the output signal of the first sensor element (12a) and the half output signal of the second sensor element (12c) forms the first zero-symmetrical output signal ($U_1'$) and the difference between the output signal of the third sensor element (12b) and the half output signal of the second sensor element (12c) forms the second zero-symmetrical output signal ($U_1'$).

2. Magnetic measuring apparatus for measuring lengths or angles of two objects movable relative to one another, with at least one permanent magnet (8) or an electromagnet for generating a steady magnetic field in a sensing unit (7), which senses a measuring graduation (4) with alternating magnetically conducting and magnetically non-conducting regions, wherein the induction generated in the measuring graduation (4) runs only in planes perpendicular to the longitudinal extent of the measuring graduation (4) and wherein there are sensor elements (12) sensitive to the magnetic field in the air-gap (11) between the magnet (8) and the measuring graduation (4) and fixedly connected to the magnet (8), which sense the air-gap induction, inhomogeneous in accordance with the graduation period t of the measuring graduation (4), and generate position-dependant output signals ($U_1$, $U_2$), which are fed to a processing device for position determination, characterized in that for deriving the at least two zero-symmetrical output signals ($U_1$, $U_2$) there is located in the air-gap (11e) at least one group of four sensor elements (21a–21d), wherein the length of each sensor element (21a–21d) in the measuring direction x is smaller than $t/4$ and the mutual pitch of the sensor elements (21a–21d) amounts to $n \cdot t/4$ (n = 1, 3, ...), and in that the output signals of the first and the third sensor elements (21a, 21c) with the mutual pitch $k \cdot t/2$ (k = 1, 3, ...), subtracted from one another, supply the first zero-symmetrical output signal ($U_1$) and the output signals of the second and fourth sensor elements (12b, 12d) with the mutual pitch $k \cdot t/2$ (k = 1, 3, ...), subtracted from one another, supply the second zero-symmetrical output signal ($U_2$).

3. Measuring apparatus according to claim 1 or 2, characterized in that the measuring graduation (4) is applied to a solid carrier (2) of soft magnetic material in the form of depressions (5) and lands (6), for example in the form of a rack bar.

4. Measuring apparatus according to claim 3, characterized in that the measuring graduation (4b) consists of trough-shaped depressions (5b) in the carrier (2b).

5. Measuring apparatus according to claim 3, characterized in that the measuring graduation (4c) consists of frustoconical depressions (5c) in the carrier (2c).

6. Measuring apparatus according to claim 1 or 2, characterized in that the measuring graduation (4d) consists of a thin strip (15) of soft magnetic material, in which cut-outs (16) are stamped and which is fitted into a groove (14) of a profile (2d) of non-magnetic material.

7. Measuring apparatus according to claim 1 or 2, characterized in that the magnet (8) is surrounded by flux-conducting pieces (9) for guiding the magnetic field and shielding against disturbing fields.

8. Measuring apparatus according to claim 1 or 2, characterized in that the sensor elements (12, 21, 22, 23) are arranged on a plate (13) of non-magnetic material, which is attached to the magnet (8).

9. Measuring apparatus according to claim 8, characterized in that the plate (13) consists of electrically non-conducting material and includes at the same time the electric supply lines and output signal lines for the sensor elements (12, 21, 22, 23).

**Revendications**

1. Appareil de mesure magnétique pour mesurer des longueurs ou des angles de deux objets (1) mobiles relativement l'un par rapport à l'autre, comportant au moins un aimant permanent (8) ou un électro-aimant pour la génération d'un champ magnétique continu dans un dispositif d'exploration (7) qui explore une échelle graduée de mesure (4) comportant des zones alternativement conductrices et non conductrices magnétiquement, l'induction générée par l'aimant (8) dans l'échelle graduée (4) ne se propageant que dans des plans perpendiculaires à l'extension longitudinale de ladite échelle graduée (4) et des éléments sondeurs (12) sensibles aux champs magnétiques, solidement assemblés à l'aimant (8), se trouvant dans l'entrefer (11) entre ledit aimant (8) et l'échelle graduée (4), ces éléments sondeurs (12) explorant l'induction non homogène dans l'entrefer variant conformément à la période de division t de ladite échelle (4) et générant des signaux de sortie ($U_1'$, $U_2'$) dépendant de la position, qui sont amenés à un dispositif d'exploitation pour la détermination de la position, caractérisé par le fait que, pour obtenir les deux signaux de sortie au moins ($U_1'$, $U_2'$) symétriques par rapport à zéro, se trouve dans l'entrefer (11) au moins un groupe de trois éléments sondeurs à chaque fois (12a, 12b, 12c), la longueur c du premier et du troisième éléments sondeurs (12a, 12b), dans la direction de la mesure x étant chaque fois inférieure à $t/2$ et la longueur d du deuxième élément sondeur (12c) étant égale à $n \cdot t$ (n = 1, 2, ...) et la distance mutuelle entre le premier et le troisième élément sondeurs (12a, 12b) étant égale à $(n + 1/4) \cdot t$ (n = 1, 2, ...) et que la différence entre le signal de sortie du premier élément sondeur (12a) et le demi-signal de sortie du deuxième élément sondeur (12c) forme le premier signal de sortie ($U_1'$) symétrique par rapport à zéro et la différence entre le signal de sortie du troisième élément sondeur (12b) et le demi-signal de sortie du deuxième élément sondeur (12c) forme le deuxième signal de sortie ($U_2'$) symétrique par rapport à zéro.

2. Appareil de mesure magnétique pour mesurer des longueurs ou des angles de deux objets (1) mobiles relativement l'un par rapport à l'autre, comportant au moins un aimant permanent (8) ou un électro-aimant pour la génération d'un champ magnétique continu dans un dispositif d'exploration (7) qui explore une échelle graduée (4) comportant alternativement des zones conductrices magnétiquement et des zones non conductrices magnétiquement, l'induction générée par l'aimant (8) dans l'échelle graduée (4) ne se propageant que dans des plans perpendiculaires à l'extension longitudinale de l'échelle graduée (4) et des éléments sondeurs (21) sensibles au champ magnétique et solidement assemblés à l'aimant (8) se trouvant dans l'entrefer (11) entre l'aimant (8) et l'échelle graduée (4), ces éléments explorant l'induction dans l'entrefer non homogène variant conformément à la période t de graduation de l'échelle (4) et générant des signaux de sortie ($U_1$, $U_2$) dépendant de la position, qui sont amenés à un dispositif d'exploitation pour la détermination de la position, caractérisé par le fait que, pour obtenir les deux signaux de sortie au moins ($U_1$, $U_2$) symétriques par rapport à zéro, se trouve dans l'entrefer (11) au moins un groupe de quatre éléments sondeurs à chaque fois (21a–21d), la longueur de chaque élément sondeur (21a–21d) dans la direction de mesure x étant inférieure à t/4 et la distance mutuelle entre éléments sondeurs (21a–21d) étant égale à n · t/4 (n = 1, 3, ...) et par le fait que le premier signal de sortie symétrique par rapport à zéro ($U_1$) est fourni par la soustraction l'un de l'autre des signaux de sortie du premier et du troisième éléments sondeurs (21a, 21c) présentant entre eux une distance égale à k · t/2 (k = 1, 3, ...) et que le deuxième signal de sortie ($U_2$) symétrique par rapport à zéro est fourni par la soustraction l'un de l'autre des signaux de sortie du deuxième et du quatrième éléments sondeurs (21b, 21d) présentant entre eux une distance égale à k · t/2 (k = 1, 3, ...).

3. Appareil de mesure selon la revendication 1 ou 2, caractérisé par le fait que l'échelle graduée (4) est disposée sur un support monobloc (2) en matière magnétique, sous forme d'évidements (5) et de nervures (6), par exemple sous forme d'une crémaillère.

4. Appareil de mesure selon la revendication 3, caractérisé par le fait que l'échelle graduée (4b) est constituée d'évidements (5b) en forme de gorge pratiqués dans le support (2b).

5. Appareil de mesure selon la revendication 3, caractérisé par le fait que l'échelle graduée (4c) est constituée d'évidements (5c) en forme de tronc de cône pratiqués dans le support (2c).

6. Appareil de mesure selon la revendication 1 ou 2, caractérisé par le fait que l'échelle graduée (4d) est constituée d'une bande mince (15) en matière magnétique dans laquelle sont pratiqués des évidements (16) et qui est insérée dans une rainure (14) d'un profilé (2d) en matériau non magnétique.

7. Appareil de mesure selon la revendication 1 ou 2, caractérisé par le fait que l'aimant (8) est entouré d'éléments conducteurs du flux magnétique (9) pour la conduction du champ magnétique et la protection contre les champs parasites.

8. Appareil de mesure selon la revendication 1 ou 2, caractérisé par le fait que les éléments sondeurs (12, 21, 22, 23) sont disposés sur une platine (13) en matière non magnétique qui est reliée à l'aimant (8).

9. Appareil de mesure selon la revendication 8, caractérisé par le fait que la platine (13) est constituée en une matière électriquement non conductrice et contient en même temps les lignes d'alimentation électriques et les lignes de sortie des signaux pour les éléments sondeurs (12, 21, 22, 23).

Fig 1a

Fig 1b

Fig. 2a

Fig 2b

Fig 3a

5b

2b

Fig. 3b

5b

2b

Fig 4a

2c          5c

Fig 4b

5c

2c

Fig 5a

4d

14
15
16 17
2d

Fig 5b

2d

14 16 15

Fig 6

Fig 7

Fig. 8

$U_1' = U_0 \sin(2\pi x/t)$

$U_2' = U_0 \cos(2\pi x/t)$

EP 0 093 232 B1